# EUROPÄISCHE PATENTSCHRIFT

(11) **EP 2 105 713 B1**
(45) Veröffentlichungstag und Bekanntmachung des Hinweises auf die Patenterteilung: **09.01.2013**
(21) Anmeldenummer: 08169975.3
(22) Anmeldetag: 26.11.2008
(51) Int. Cl.: G01D 5/20

(54) **Positionsmessgerät und Verfahren zu dessen Betrieb**
Positioning device and method for its operation
Appareil de mesure de position et son procédé de fonctionnement

(30) Priorität: 27.03.2008 DE 102008015837
(43) Veröffentlichungstag der Anmeldung: 30.09.2009
(73) Patentinhaber: Dr. Johannes Heidenhain GmbH, 83301 Traunreut (DE)
(72) Erfinder: Izak, Richard, 83313 Siegsdorf (DE); Oberhauser, Johann, 83377 Vachendorf (DE); Noichl, Robert, 83543 Rott (DE)

(56) Entgegenhaltungen:
- EP-A- 0 872 712
- DE-A1- 19 751 853

## Beschreibung

Die Erfindung betrifft ein Positionsmessgerät zur Bestimmung von Relativpositionen, welches nach einem induktiven Messprinzip arbeitet, gemäß dem Anspruch 1 und ein entsprechendes Verfahren zum Betrieb eines derartigen Positionsmessgerätes gemäß dem Anspruch 13.

Induktive Positionsmessgeräte können beispielsweise als induktive Drehgeber zur Bestimmung der Winkellage zweier relativ zueinander drehbaren Maschinenteile ausgebildet sein. Bei induktiven Drehgebern werden Erregerwindungen und Empfängerspulen etwa in Form von Leiterbahnen auf einer gemeinsamen Leiterplatte aufgebracht, die beispielsweise mit einem Stator eines Drehgebers fest verbunden ist. Dieser Leiterplatte gegenüber befindet sich eine weitere Platine, die als Codescheibe ausgebildet ist, auf der in periodischen Abständen alternierend elektrisch leitfähige und nichtleitfähige Flächen als Teilungsbereich bzw. Teilungsstruktur aufgebracht sind, und welche mit dem Rotor des Drehgebers drehfest verbunden ist. Wenn an den Erregerwindungen durch einprägen eines Erregerstroms ein zeitlich wechselndes elektrisches Erregerfeld angelegt wird, werden in den Empfängerspulen während der Relativdrehung zwischen Rotor und Stator von der Winkellage, bzw. der Relativlage zwischen Teilungsstruktur und Empfängerspulen, abhängige Signale erzeugt. Die Ursache hierfür liegt darin begründet, dass die Teilungsstruktur das vom Erregerstrom erzeugte Magnetfeld beeinflusst, also verstärkt oder abschwächt. Diese Signale werden dann in einer Auswerteelektronik weiterverarbeitet.

Häufig werden solche Drehgeber als Messgeräte für elektrische Antriebe, zur Bestimmung der absoluten Winkellage von entsprechenden Antriebswellen, eingesetzt. Dabei ist es insbesondere unter sicherheitstechnischen Gesichtspunkten wichtig, dass auch nach einem Ausschalten des Systems oder bei einem Stromausfall zumindest die in diesem Zustand erfolgten vollen Umdrehungen gezählt werden.

In der DE 197 51 853 A1 der Anmelderin wird ein Aufbau für einen induktiven Drehgeber beschrieben, bei dem die Erreger- und Empfängerspulen in einer mehrschichtigen Leiterplatten-Struktur angeordnet sind.

Damit ein derartiger Drehgeber auch bei fehlender Netzspannungsversorgung zumindest die Anzahl und Drehrichtung der zurückgelegten vollen Umdrehungen zählen kann, wurden bisher weiterhin am Rotor entsprechende Magnete und an einer Statorleiterplatte zwei oder mehrere Magnetsensoren vorgesehen, welche Zählsignale erzeugen. Die Magnetsensoren und eine für die Zählung notwendige Auswerteelektronik wurden in diesem Betriebszustand von einer Pufferbatterie versorgt.

In einer noch unveröffentlichten deutschen Patentanmeldung der Anmelderin mit dem Aktenzeichen 10 2006 046 531.8 wird ein induktiver Drehgeber beschrieben, der bei fehlender Netzspannungsversorgung in einem energiesparenden Modus betrieben werden kann, in dem der Drehgeber von einer Pufferbatterie versorgt wird. Um den Energieverbrauch in diesem Modus zu senken, wird vorgeschlagen, die Erregerspulen nur noch mit einem gepulsten Erregerstrom zu versorgen.

Die EP 0 872 712 A2 beschreibt ein induktives Positionsmessgerät, bei dem ein Erregerstrom in einer Erregerspule durch Einschaltpulse bestimmter Dauer erzeugt wird. Das daraus resultierende Magnetfeld induziert in Empfängerspulen Spannungen, deren Verlauf einer gedämpften Schwingung entspricht. Zur Ermittlung der Positionsinformation wird der Maximalwert der in den Empfängerspulen induzierten Spannungen ausgewertet.

Der Ereindung liegt die Aufgabe zugrunde, ein induktives Positionsmessgerät zu schaffen, das gegenüber dem Stand der Technik weiter verbessert ist. Ferner liegt der Erfindung die Aufgabe zugrunde, ein Verfahren für den Betrieb eines derartigen induktiven Positionsmessgeräts zu schaffen.

Hinsichtlich des Positionsmessgeräts wird diese Aufgabe durch die Merkmale des Anspruches 1 gelöst.

Es wird nun ein Positionsmessgerät vorgeschlagen, umfassend eine Maßverkörperung, auf der wenigstens eine Teilungsspur aufgebracht ist und einen Trägerkörper. An dem Trägerkörper ist mindestens eine Erregerwindung, durch welche zur Erzeugung eines elektromagnetischen Feldes ein Erregerstrom leitbar ist, sowie mindestens eine Detektoranordnung zur Abtastung des elektromagnetischen Feldes angeordnet. Weiter umfasst das Positionsmessgerät einen Kondensator, der zusammen mit der Erregerwindung einen LC-Schwingkreis bildet, ein Auswerteelement und ein Schaltelement, das vom Auswerteelement schaltbar ist. Die Maßverkörperung und der Trägerkörper sind relativ zueinander beweglich angeordnet und bei einer Relativbewegung der Maßverkörperung gegenüber dem Trägerkörper ist das elektromagnetische Feld von der wenigstens einen Teilungsspur beeinflussbar. Der LC-Schwingkreis ist durch Schalten des Schaltelements mit einem Erregerstrom betreibbar, der in der Detektoranordnung wenigstens eine Spannung induziert, die zur Ermittlung von Positionsinformationen vom Auswerteelement elektronisch verarbeitbar ist. Die Erfindung ist dadurch gekennzeichnet, dass die Erzeugung des Erregerstroms durch Schalten des Schaltelements mit Einschaltpulsen, die eine Einschaltzeitdauer TP aufweisen, erfolgt und dass die wenigstens eine in der Detektoranordnung induzierte Spannung zur Ermittlung der Positionsinformationen im Bereich nach der Ausschaltflanke des Einschaltpulses gemessen wird.

Ein Verfahren zum Betrieb eines derartigen Positionsmessgeräts ist in Anspruch 13 angegeben.

Vorteilhafte Ausbildungen der Erfindung entnimmt man den abhängigen Ansprüchen.

Weitere Einzelheiten und Vorteile des erfindungsgemäßen induktiven Positionsmessgeräts, sowie des Verfahrens zu dessen Betrieb ergeben sich aus der nachfolgenden Beschreibung eines Ausführungsbeispiels anhand der beiliegenden Figuren.

Es zeigen die
- Figur 1: eine Draufsicht auf eine Codescheibe,
- Figur 2: eine Draufsicht auf eine Abtastleiterplatte,
- Figur 3: ein schematisches Schaltbild,
- Figur 4: einen Signalverlauf einer induzierten Spannung in einer Detektorwindung,
- Figur 5: ein Blockdiagramm eines Auswerteelements und
- Figur 6: eine Schnittdarstellung eines Drehgebers.

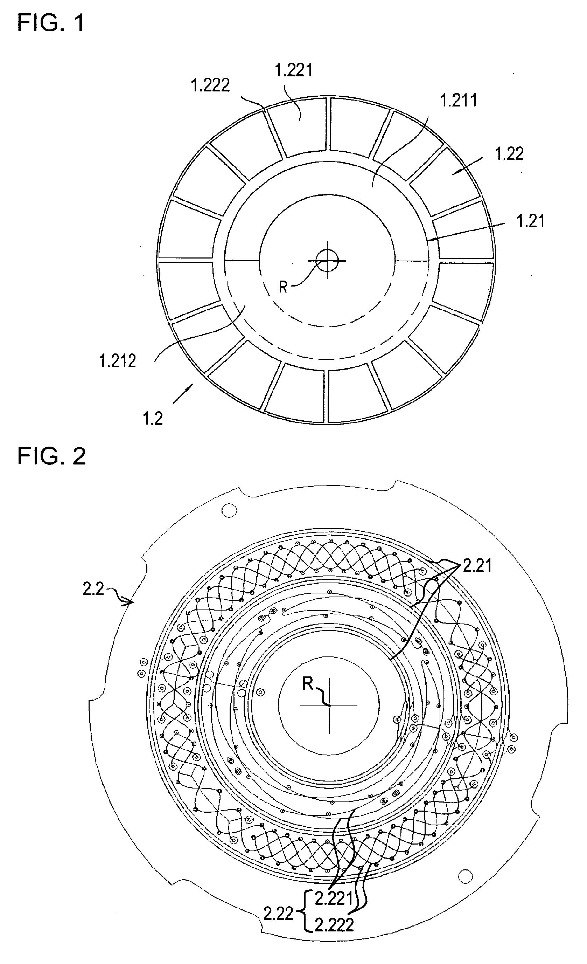

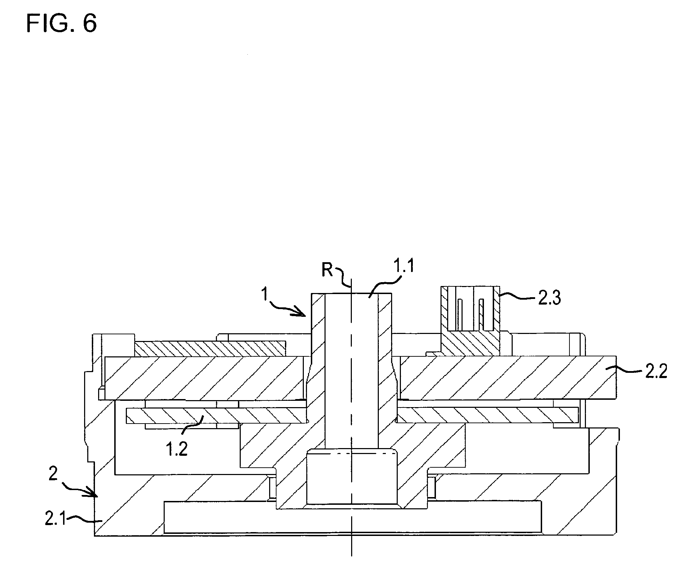

In den Figuren 1, 2 und 6 ist der prinzipielle Aufbau eines erfindungsgemäßen Positionsmessgeräts am Beispiel eines Drehgebers gezeigt. Gemäß der Figur 6 weist der Drehgeber einen Rotor 1 und einen Stator 2 auf. Im vorgestellten Ausführungsbeispiel umfasst der Rotor 1 eine Welle 1.1, welche beispielsweise an einer zu messenden Motorwelle drehfest montiert werden kann. An einem Absatz der Welle 1.1 ist zur Erfassung ihrer Winkellage eine Maßverkörperung 1.2, in diesem Fall in Form einer Codescheibe 1.2 mit - in der Figur 6 nicht dargestellten - Teilungsspuren 1.21, 1.22 drehfest festgelegt.

Der Stator 2 umfasst ein Gehäuse 2.1, an dem als Trägerkörper eine ringförmige Abtastleiterplatte 2.2 befestigt ist. Unter anderem ist auf der Abtastleiterplatte 2.2 ein Steckverbinder 2.3 montiert, durch welchen Signale und elektrische Leistung übertragen werden können. Der Rotor 1 und der Stator 2, bzw. die Welle 1.1 und das Gehäuse 2.1 sind um ein Drehachse R relativ zueinander drehbar.

In der Figur 1 ist die Codescheibe 1.2 in einer Draufsicht gezeigt. Die Codescheibe 1.2 besteht aus einem Substrat, welches im dargestellten Ausführungsbeispiel aus Epoxydharz hergestellt ist und auf dem zwei Teilungsspuren 1.21, 1.22 angeordnet sind. Die Teilungsspuren 1.21, 1.22 sind ringförmig ausgebildet und bezüglich der Drehachse R konzentrisch mit unterschiedlichem Durchmesser auf dem Substrat angeordnet. Die beiden Teilungsspuren 1.21, 1.22 bestehen jeweils aus einer periodischen Abfolge von alternierend angeordneten elektrisch leitfähigen Teilungsbereichen 1.211, 1.221 und nichtleitfähigen Teilungsbereichen 1.212, 1.222. Als Material für die elektrisch leitfähigen Teilbereiche 1.211, 1.221 wurde im gezeigten Beispiel Kupfer auf das Substrat aufgebracht. In den nichtleitfähigen Teilungsbereichen 1.212, 1.222 wurde das Substrat dagegen nicht beschichtet.

Die innere Teilungsspur 1.21 besteht in der dargestellten Ausführungsform aus einem ersten halbringförmigen Teilungsbereich 1.211 mit elektrisch leitfähigem Material, hier Kupfer, sowie einem zweiten halbringförmigen Teilungsbereich 1.212, in dem kein leitfähiges Material angeordnet ist.

Radial benachbart zur ersten Teilungsspur 1.21 liegt die zweite Teilungsspur 1.22 auf dem Substrat, wobei auch die Teilungsspur 1.22 aus einer Vielzahl elektrisch leitfähiger Teilungsbereiche 1.221 sowie dazwischen angeordneten nichtleitfähigen Teilungsbereichen 1.222 besteht. Die verschiedenen Teilungsbereiche 1.221, 1.222 sind materialmäßig dabei ebenso ausgebildet wie die Teilungsbereiche 1.211, 1.212 der ersten Teilungsspur 1.21. Insgesamt umfasst die zweite Teilungsspur 1.22 im dargestellten Ausführungsbeispiel sechzehn periodisch angeordnete, elektrisch leitfähige Teilungsbereiche 1.221 sowie entsprechend sechzehn dazwischen angeordnete nichtleitfähige Teilungsbereiche 1.222.

Die in Figur 2 gezeigte, zur Abtastung der Codescheibe 1.2 vorgesehene Abtastleiterplatte 2.2 dient als Trägerkörper unter anderem für eine Detektoranordnung, welche hier aus verschiedenen Empfängerspulen 2.22 besteht. Diese Empfängerspulen 2.22 weisen als erste Detektorwindungen in einer inneren Empfängerspur Empfängerleiterbahnen 2.221 und als zweite Detektorwindungen in einer äußeren Empfängerspur weitere Empfängerleiterbahnen 2.222 auf. Zusammengehörige Paare der Empfängerleiterbahnen 2.221, 2.222 einer jeweiligen Empfängerspur sind hierbei relativ zueinander versetzt angeordnet, so dass diese voneinander unterscheidbare Signale liefern können, aus denen eine Information über die Relativposition zwischen Rotor 1 und Stator 2, sowie deren Bewegungsrichtung ermittelbar ist. Mit Vorteil sind die jeweiligen Empfängerleiterbahnen 2.221, 2.222 der Empfängerspuren so zueinander versetzt, dass die aus der Abtastung resultierenden Signale einen definierten Phasenwinkel, vorzugsweise 90°, aufweisen. Bezogen auf einen Phasenwinkel von 90° bedeutet das, dass, wenn eines der Signale einer Empfängerspur gerade ein positives oder negatives Maximum erreicht, das andere der Signale einen Mittelwert, bzw. bezogen auf den Maximalwert und den Minimalwert einen Nulldurchgang aufweist.

Darüber hinaus sind als Erregerwindungen an der Abtastleiterplatte 2.2 Erregerleiterbahnen 2.21 vorgesehen, welche auf einer inneren, einer mittleren und einer äußeren Erregerspur aufgebracht sind. Die Abtastleiterplatte 2.2 selbst weist eine zentrische Bohrung auf und ist als eine Leiterplatte, welche mehrere Lagen aufweist, ausgeführt.

Im zusammengebauten Zustand stehen sich die Codescheibe 1.2 und die Abtastleiterplatte 2.2 gegenüber, so dass die Achse R durch die Mittelpunkte beider Elemente verläuft und bei einer Relativdrehung zwischen Codescheibe 1.2 und Abtastleiterplatte 2.2 in den Empfängerleiterbahnen 2.221, 2.222 in der Abtastleiterplatte 2.2 von der jeweiligen Winkelstellung abhängige Signale durch Induktionseffekte erzeugbar sind. Somit sind durch Auswertung dieser Signale Positionsinformationen ermittelbar.

Vorraussetzung für die Bildung von entsprechenden Signalen ist, dass die Erregerleiterbahnen 2.21 ein zeitlich wechselndes elektromagnetisches Erregerfeld im Bereich der Abtastspuren bzw. im Bereich der damit abgetasteten Teilungsspuren 1.21 und 1.22 erzeugen. Im dargestellten Ausführungsbeispiel sind die Erregerleiterbahnen 2.21 als mehrere planar-parallele stromdurchflossene Einzel-Leiterbahnen ausgebildet. Werden die Erregerleiterbahnen 2.21 einer Leiterbahneinheit allesamt in der gleichen Richtung von einem Erregerstrom durchflossen, so bildet sich um die jeweilige Leiterbahneinheit ein schlauch- bzw. zylinderförmig orientiertes elektromagnetisches Feld aus. Die Feldlinien des resultierenden elektromagnetischen Feldes verlaufen in Form konzentrischer Kreise um die Leiterbahneinheiten, wobei die Richtung der Feldlinien in bekannter Art und Weise von der Stromrichtung in den Leiterbahneinheiten abhängt. Die Stromrichtung der unmittelbar an eine gemeinsame Abtastspur angrenzenden Leiterbahneinheiten bzw. die entsprechende Verschaltung dieser Leiterbahneinheiten ist dabei entgegengesetzt zu wählen, so dass die Feldlinien im Bereich der Abtastspuren jeweils identisch orientiert sind.

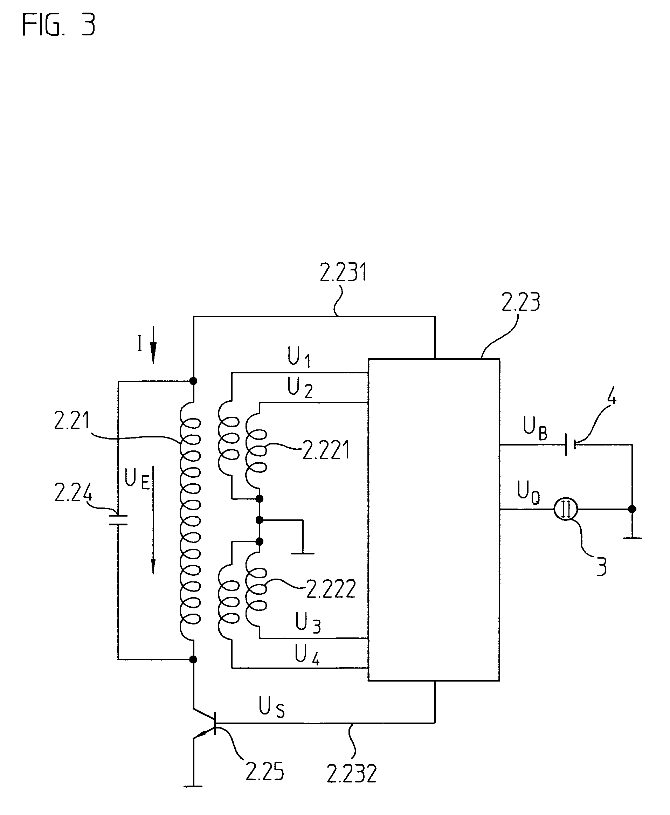

In der Figur 3 ist schematisch ein Schaltkreis dargestellt, anhand dessen die Funktionsweise des Drehgebers erläutert werden soll. Der Drehgeber ist mit einer externen Gleichspannungsquelle 3 verbunden, über die er im Normalbetrieb versorgt wird. Im dargestellten Ausführungsbeispiel beträgt die Spannung U_{C} der Gleichspannungsquelle 3 fünf Volt. Für den Fall, dass aus irgendeinem Grund die Gleichspannungsquelle 3 nicht zur Verfügung steht, wird der Drehgeber vorübergehend durch eine Batterie 4 mit elektrischer Energie versorgt, wobei hier die von der Batterie 4 abgegebene Spannung beispielsweise drei Volt betragen kann. Die Batterie 4 kann entweder direkt im Drehgeber, beispielsweise auf der Abtastleiterplatte 2.2 untergebracht sein, oder auch extern in einer Folgeelektronik, etwa einer Werkzeugmaschinensteuerung, angeordnet sein.

Auf der Abtastleiterplatte 2.2 ist ein ASIC 2.23 angeordnet, welcher als Auswerteelement 2.23 arbeitet, unter dessen Kontrolle der Erregerstrom I erzeugt und aus den daraus resultierenden, in den Empfängerleiterbahnen 2.221, 2.222 induzierten Spannungen, Positionsinformationen, insbesondere Winkelinformationen, ermittelt werden. Erfindungsgemäß handelt es sich beim Erregerstrom I um einen gepulsten Strom. Das ist besonders dann vorteilhaft, wenn der Drehgeber über die Batterie 4 versorgt wird, da in diesem Fall der Energieverbrauch signifikant gesenkt und damit die Lebensdauer der Batterie 4 erhöht werden kann.

Neben dem gepulsten Betrieb kann der Drehgeber auch noch andere Betriebsmodi, beispielsweise mit einem kontinuierlich zugeführten, periodischen Erregerstrom I, aufweisen.

Der Kondensator 2.24 und die Erregerleiterbahnen 2.21 sind parallel geschaltet und bilden einen elektrischen LC-Schwingkreis mit einer Resonanzperiodendauer TR. In der Praxis liegt der Wert für die Resonanzperiodendauer TR häufig zwischen wenigen hundert Nanosekunden und einigen Mikrosekunden, das entspricht einer Resonanzfrequenz von mehreren hundert Kilohertz bis einigen Megahertz. Bezogen auf die Verlustleistung sind hierbei höhere Frequenzen zu bevorzugen, da hier der LC-Schwingkreis eine höhere Güte aufweist.

Ein Anschluss der Parallelschaltung ist über eine Versorgungsleitung 2.231 mit dem Auswerteelement 2.23 verbunden und wird über dieses mit Spannung, beispielsweise der Spannung der Gleichspannungsquelle 3 oder der Batterie 4, versorgt. Der zweite Anschluss der Parallelschaltung ist über ein Schaltelement 2.25 mit dem Massepunkt der Schaltung verbunden. Die Steuerung, ob das Schaltelement 2.25 ein- oder ausgeschaltet ist, erfolgt über eine Schaltleitung 2.232 des Auswerteelements 2.23. Somit bestimmt der Schaltzustand des Schaltelements 2.25, ob ein Erregerstrom I fließt oder nicht. Das Schaltelement 2.25 ist in Figur 3 als bipolarer Transistor gezeichnet, es können aber auch andere geeignete Bauteile, wie beispielsweise MOSFETs eingesetzt werden. Ebenso ist es möglich, dass das Schaltelement 2.25 mit im Auswerteelement 2.23 integriert ist.

Durch den Erregerstrom I wird um die Erregerleiterbahnen 2.21 ein elektromagnetisches Feld generiert. Aus diesem resultiert ein magnetischer Fluss, der die Empfängerspulen 2.22 durchdringt. Weiter erzeugt der Erregerstrom I über der Parallelschaltung aus Kondensator 2.24 und Erregerleiterbahnen 2.21 eine Erregerspannung U_{E}. Aufgrund des Induktionsgesetzes werden bei einem sich ändernden magnetischen Fluss in den Empfängerleiterbahnen 2.221, 2.222 Spannungen U₁, U₂, U₃, U₄ induziert. Da der Verlauf der induzierten Spannungen U₁, U₂, U₃, U₄ unter anderem auch von der Winkelstellung der Codescheibe 1.2 abhängt, kann durch deren Auswertung die Winkelstellung der Codescheibe 1.2 ermittelt werden. So umfassen die Empfängerleiterbahnen 2.221 beispielsweise zwei durch Leiterbahnen gebildete Spulen, die, abhängig von der Relativposition, bzw. dem Drehwinkel, Spannungen U₁, U₂ mit unterschiedlichen Amplituden liefern. Innerhalb einer Umdrehung relativ zum Trägerkörper, also bei einem Drehwinkel von 2π (360°), liefern die Empfängerleiterbahnen 2.221 bei der Abtastung der ersten Teilungsspur 1.21 jeweils Spannungen U₁, U₂ von einem Maximum bis zu einem Minimum. Die Ursache für die positionsabhängige Beeinflussung des Magnetfeldes, aus dem die Induktion der Spannungen U₁, U₂ resultiert, liegt darin begründet, dass in den elektrisch leitfähigen, beschichteten Bereichen 1.211, 1.221 der Codescheibe 1.2 Wirbelströme induziert werden, deren Höhe von der Winkelstellung zwischen Codescheibe 1.2 und Abtastleiterplatte 2.2 abhängt.

Die in den Empfängerspulen 2.22 induzierten Spannungen U₁, U₂, U₃, U₄ sind für die Ermittlung der Positionsinformation dem Auswerteelement 2.23 zugeführt.

Da die Teilungsspur 1.21 lediglich einen einzigen beschichteten Bereich 1.211 und einen einzigen unbeschichteten Bereich 1.212 aufweist, resultiert aus deren Abtastung eine relativ grobe, absolute Positionsinformation innerhalb einer Umdrehung der Codescheibe 1.2 um die Drehachse R. Durch eine Auswertung des Amplitudenverlaufs der Signale ist zudem eine Richtungserkennung der Drehbewegung gewährleistet. Somit kann durch die Abtastung der Teilungsspur 1.21 beispielsweise ein Umdrehungszähler realisiert werden.

Die weiteren Empfängerleiterbahnen 2.222 auf der zweiten, äußeren Abtastspur dienen zur Abtastung der zweiten Teilungsspur 1.22. Zwischen den beiden Empfängerleiterbahnen 2.222 ist ebenfalls ein Relativ-Versatz vorgesehen, so dass ausgangsseitig bei der Abtastung der zweiten Teilungsspur 1.22 zwei Signale entstehen, die einen positionsabhängigen Amplitudenverlauf aufweisen.

Die äußeren Empfängerleiterbahnen 2.222 weisen jeweils sechzehn, also 2⁴ Windungen auf, so dass mit den äußeren Empfängerleiterbahnen 2.222 ein vergleichsweise hoch auflösendes Inkrementalsignal bei der Relativbewegung der Codescheibe 1.2 gegenüber der Abtastleiterplatte 2.2 erzeugt werden kann. Innerhalb einer Umdrehung relativ zum Trägerkörper, also bei einem Drehwinkel von 2π (360°), liefern die Empfängerleiterbahnen 2.222 jeweils sechzehn Maxima bzw. Minima bei der Abtastung der Teilungsspur 1.22.

In Verbindung mit der groben absoluten Positionsbestimmung über die erste Teilungsspur 1.21 ist über eine derartige Anordnung eine absolute Drehwinkelbestimmung möglich.

Alternativ zum dargestellten Beispiel können die induzierten Spannungen U₁, U₂, U₃, U₄ auch differenziell und nicht massebezogen erzeugt, bzw. verarbeitet werden.

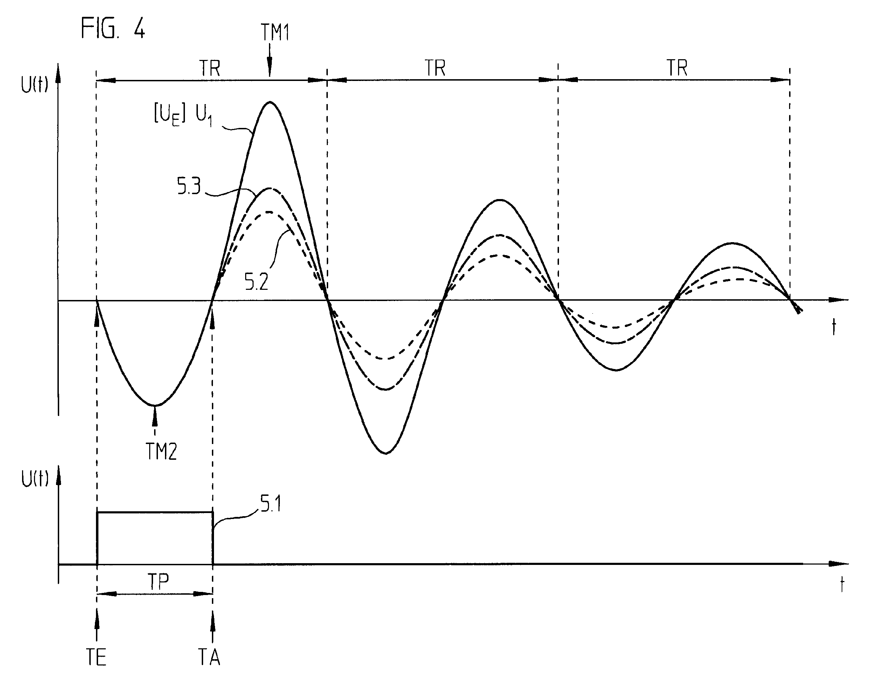

Figur 4 zeigt am Beispiel der Spannung U₁ den zeitlichen Verlauf der induzierten Spannungen U₁, U₂, U₃, U₄ in den Empfängerleiterbahnen 2.221, 2.222 in Abhängigkeit von einem Einschaltpuls 5.1 auf der Schaltleitung 2.232, der das Schaltelement 2.25 zu einem Einschaltzeitpunkt TE einschaltet und zu einem Ausschaltzeitpunkt TA wieder ausschaltet. Dabei zeigt die Kurve im unteren Diagramm den Einschaltpuls 5.1 mit einer Einschaltzeitdauer TP des Schaltelements 2.25. Im oberen Diagramm zeigt die gestrichelte Linie eine aus der Einschaltflanke des Einschaltpulses 5.1 resultierende induzierte Einschaltschwingung 5.2. Diese kommt dadurch zustande, dass das Einschalten des Schaltelements 2.25 in den Erregerleiterbahnen 2.21 einen Erregerstrom I erzeugt, der einen sich ändernden, ansteigenden magnetischen Fluss bewirkt. Die strichpunktierte Linie zeigt eine von der Ausschaltflanke des Einschaltpulses 5.1 induzierte Ausschaltschwingung 5.3. Diese wird durch das Ausschalten des Schaltelements 2.25, bzw. das Ausschalten des Erregerstroms I und dem daraus resultierenden abfallenden magnetischen Fluss generiert. Die durchgezogene Linie zeigt die Spannung U₁, die durch eine Überlagerung der Einschaltschwingung 5.2 und der Ausschaltschwingung 5.3 entsteht. Da die Änderung des magnetischen Flusses beim Einschalten und Ausschalten ein unterschiedliches Vorzeichen hat, haben die Einschaltschwingung 5.2 und die Ausschaltschwingung 5.3 eine umgekehrte Polarität. Bis zur Ausschaltflanke des Einschaltpulses 5.1 findet keine Überlagerung statt, daher sind bis zu diesem Zeitpunkt die Spannung U₁ und die Einschaltschwingung 5.3 identisch.

Die Erregerleiterbahnen 2.21 und die Empfängerleiterbahnen 2.221, bzw. 2.222 stellen einen Übertrager dar. Aus diesem Grund entspricht der Signalverlauf der induzierten Spannungen U₁, U₂, U₃, U₄ weitgehend dem der Erregerspannung U_{E}. Die Erregerspannung U_{E} weist jedoch eine höhere Signalamplitude auf, die darüber hinaus nicht von der Relativposition zwischen der Codescheibe 1.2 und Abtastleiterplatte 2.2 abhängig ist. Die Erregerspannung U_{E} ist deshalb in Figur 4 in eckigen Klammern neben der induzierten Spannung U₁ angegeben.

Die Überlagerung der Einschaltschwingung 5.2 und der Ausschaltschwingung 5.3 führt nun dazu, dass im Bereich des Scheitelpunktes der ersten Halbwelle der von der Ausschaltflanke des Einschaltpulses 5.1 erzeugten Ausschaltschwingung 5.3, bzw. der Spannung U₁ (gekennzeichnet durch ein erstes Messtriggersignal TM1), eine wesentlich höhere Spannung gemessen wird als ohne Überlagerung. Die Erfassung der Positionsinformation ist somit in diesem Fall wesentlich störsicherer. Außerdem kann eine höhere Genauigkeit der Messung erreicht werden.

Die Ermittlung der Positionsinformation kann noch weiter verbessert werden, wenn nicht nur die Spannung im Bereich des Scheitelpunktes der ersten Halbwelle der Spannung U₁ nach der Ausschaltflanke des Einschaltpulses 5.1, sondern auch im Bereich des Scheitelpunktes der ersten Halbwelle der von der Einschaltflanke des Einschaltpulses 5.1 (gekennzeichnet durch ein zweites Messtriggersignal TM2) erzeugten Einschaltschwingung 5.2 gemessen wird. Dadurch wird eine Redundanz eingeführt, die dazu genutzt werden kann, durch Vergleich der beiden Spannungswerte deren Plausibilität zu prüfen. Als Kriterium für eine korrekte Funktion kann beispielsweise dienen, dass die beiden Spannungswerte zueinander vorzeichenumgekehrt sind. Somit ist eine einfache Überprüfung der Funktion der Messanordnung möglich.

Außerdem ist es vorteilhaft, die beiden Spannungswerte an den ersten beiden Scheitelpunkten der Spannung U1 vor der Messung zuerst betragsmäßig analog zu addieren um eine höhere auswertbare Signalamplitude zu erhalten und die Störsicherheit und Genauigkeit der Messung weiter zu erhöhen.

Die induzierten Spannungen U₁, U₂, U₃, U₄ werden vom Auswerteelement 2.23 elektronisch in der Weise verarbeitet, dass eine entsprechende Winkellageinformation für die Welle 1.1 ermittelt wird.

Der hier gezeigte Fall, dass die Ausschaltflanke des Einschaltpulses 5.1 beim ersten Nulldurchgang der induzierten Spannung U₁ ausgelöst wird, führt zu einer optimalen Überlagerung der Einschaltschwingung 5.2 und der Ausschaltschwingung 5.3 und damit zur höchsten erreichbaren Signalamplitude der induzierten Spannung U₁. Er ist deshalb in der Praxis zu bevorzugen, wenn eine hohe auszuwertende Signalamplitude angestrebt wird. Die Einschaltzeitdauer TP entspricht in diesem Fall der halben Resonanzperiodendauer TR (TP = TR/2). Geringfügige Abweichungen, insbesondere wenn die Ausschaltflanke des Einschaltpulses 5.1 im Bereich zwischen einem Viertel und drei Vierteln der Resonanzperiodendauer ausgelöst wird, führen jedoch auch zu auswertbaren Signalen.

Für den Fall, dass ein besonders energieeffizientes Positionsmessgerät realisiert werden soll, ist es dagegen besonders vorteilhaft, die Einschaltzeitdauer TP auf ein Viertel der Resonanzperiodendauer TR zu beschränken (TP = TR/4), da diese Zeitdauer bereits ausreicht, eine auswertbare Spannung U1 auszubilden. Durch die kurze Zeit, in der der LC-Schwingkreis mit Strom versorgt werden muss, kann beispielsweise bei Batteriebetrieb eine sehr lange Lebensdauer der Batterie 4 erreicht werden.

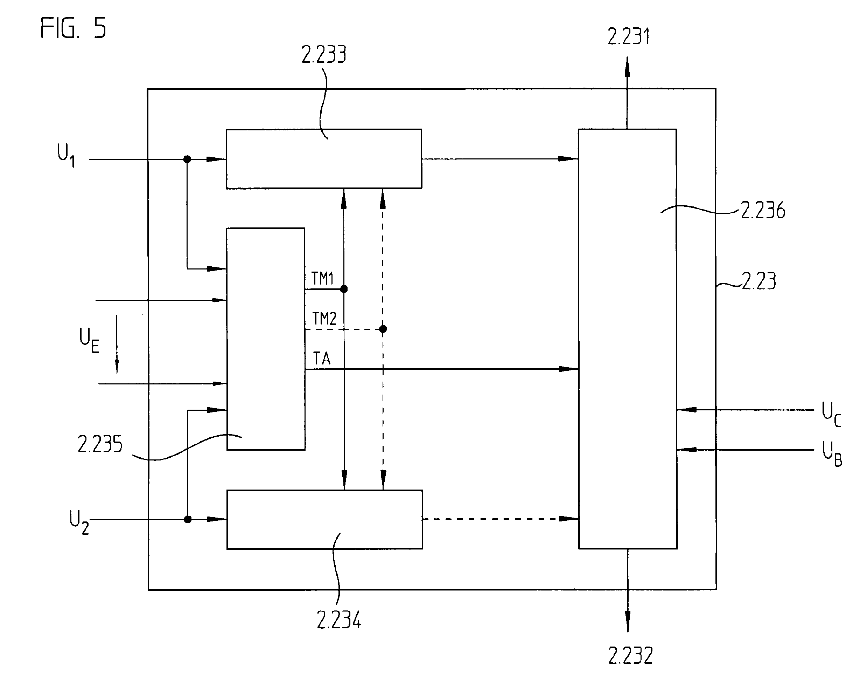

Figur 5 zeigt ein Blockdiagramm eines Auswerteelements 2.23, wobei hier lediglich die Einheiten gezeigt sind, die für die Auswertung von zwei Spannungen U₁, U₂, die durch die Abtastung einer Teilungsspur mittels zweier zueinander versetzt angeordneten Empfängerleiterbahnen, z.B. der Abtastung der ersten Teilungsspur 1.21 mittels der Empfängerleiterbahnen 2.221, benötigt werden.

Die Eingänge des Auswerteelements 2.23 bilden eine erste Spannung U₁ und eine zweite Spannung U₂, die aus der Abtastung der ersten Teilungsspur 1.21 mittels der zwei zueinander versetzt angeordneten Empfängerleiterbahnen 2.221 resultieren, sowie die Erregerspannung U_{E}. Die Amplituden der ersten Spannung U₁ bzw. der zweiten Spannung U₂ sind, wie oben bereits beschrieben, abhängig von der relativen Position der Empfängerleiterbahnen 2.221 zur Teilungsspur 1.21. Die erste Spannung U₁ ist einer ersten Messeinheit 2.233, die zweite Spannung U₂ einer zweiten Messeinheit 2.234 zugeführt. Die Messeinheiten 2.233 und 2.234 dienen dazu, die Spannungen U₁ bzw. U₂ zu messen und die Ergebnisse der Messungen an eine Verarbeitungseinheit 2.236 weiterzuleiten.

Zur Festlegung des zeitlichen Ablaufs der Messungen ist die Erregerspannung U_{E} einer Triggereinheit 2.235 zugeführt. Diese ermittelt Triggersignale zur Festlegung der Einschaltzeitdauer TP des Einschaltpulses 5.1, sowie zur Bestimmung wenigstens eines Messzeitpunktes zur Messung der Spannungen U₁, U₂ und übermittelt diese an die Verarbeitungseinheit 2.236, bzw. an die Messeinheiten 2.233, 2.234. Die Erregerspannung U_{E} wird im Folgenden vereinfacht als massebezogenes Signal betrachtet. Wie aus Figur 3 zu entnehmen ist, sind für den Messablauf vorwiegend zwei Zeitpunkte besonders vorteilhaft, zum einen der erste Scheitelpunkt der Spannung U₁ bzw. U₂ nach der Ausschaltflanke des Einschaltpulses 5.1, da an dieser Stelle die zu messende Spannung U₁, U₂ die größte Amplitude aufweist, und zum anderen der erste Nulldurchgang der Einschaltschwingung 5.2, da hier ein günstiger Zeitpunkt für die Ausschaltflanke des Einschaltpulses 5.1 liegt. Mit Vorteil ist die Triggereinheit 2.235 deshalb so ausgebildet, dass sie zu diesen Zeitpunkten Triggersignale an die Messeinheiten 2.233 und 2.234, bzw. an die Verarbeitungseinheit 2.236 ausgibt, so dass diese den Messablauf entsprechend steuern kann.

Der Ausschaltzeitpunkt TA beim Nulldurchgang der Einschaltschwingung 5.2 entspricht weitgehend dem Nulldurchgang der Erregerspannung U_{E} und kann beispielsweise in der Triggereinheit 2.235 einfach mittels eines Nullpunktdetektors, insbesondere eines Komparators, bestimmt werden, der den Spannungsverlauf der Erregerspannung U_{E} mit einer Referenzspannung, in diesem Fall dem Massepotential der Schaltung, vergleicht. Das Ergebnis des Vergleichs wird in Form eines Ausschalttriggersignals TA an die Verarbeitungseinheit 2.236 ausgegeben.

Die Spannungen U₁, U₂ erreichen den ersten Scheitelpunkt ausgehend von der Ausschaltflanke des Einschaltpulses TP nach einem Viertel der Resonanzperiodendauer TR. Für die Ermittlung dieses Zeitpunktes kann beispielsweise die Eigenschaft der gegenseitigen Ableitung von Sinus- bzw. Kosinusfunktionen genutzt werden. Konkret kann die Erregerspannung U_{E} einem analogen Differenzierer zugeführt werden, in dem die Ableitung der Erregerspannung U_{E} gebildet wird. Das Ausgangssignal des Differenzierers kann dann wiederum an einen Nullpunktdetektor weitergeleitet werden, der zum Zeitpunkt des Nulldurchgangs der differenzierten Erregerspannung U_{E}, der ja weitgehend mit dem Scheitelpunkt der Spannungen U₁, U₂ übereinstimmt, ein erstes Messtriggersignal TM1 an die Messeinheiten 2.233, 2.234 ausgibt. An Stelle des Differenzierers kann beispielsweise auch ein Integrierer eingesetzt werden.

In einer vereinfachten Ausführungsform kann das erste Messtriggersignal TM1 zur Messung der Spannungen U₁, U₂ im Bereich des ersten Scheitelpunkts nach der Ausschaltflanke des Einschaltpulses 5.1 auch dadurch erzeugt werden, dass es automatisch, beispielsweise unter Verwendung eines Zeitgliedes, eine viertel Periodendauer der LC-Resonanzfrequenz nach dem Ausschaltriggersignal TA (bzw. der Ausschaltflanke des Einschaltpulses 5.1) ausgegeben wird.

Anstelle der, oder zusätzlich zur Erregerspannung U_{E} können zur Bildung der Triggersignale TA, TM1 auch die Spannungen U₁, U₂ verwendet werden. Da diese jedoch eine kleinere Amplitude als die Erregerspannung U_{E} aufweisen, die darüber hinaus noch positionsabhängig ist, ist in der Praxis die Verwendung der Erregerspannung U_{E} zu bevorzugen.

Wie oben bereits erwähnt, ist es besonders vorteilhaft, wenn zur Erfassung der Spannungen U₁, U₂ nicht nur der erste Scheitelpunkt der Spannungen U₁, U₂ nach der Ausschaltflanke des Einschaltpulses 5.1 herangezogen wird, sondern auch der erste Scheitelpunkt der Einschaltschwingung 5.2. Die Spannungen U₁, U₂ erreichen diesen Scheitelpunkt ausgehend von der Einschaltflanke des Einschaltpulses TP ebenfalls nach einem Viertel der Resonanzperiodendauer TR. Um die Spannungen U₁, U₂ zu diesem Zeitpunkt zu messen, kann in der Triggereinheit 2.235 ein zweites Messtriggersignal TM2 zum Zeitpunkt des ersten Scheitelpunktes der Einschaltschwingung 5.2 erzeugt werden, das ebenfalls den Messeinheiten 2.233, 2.234 zugeführt wird. Hierzu sind beispielsweise die bereits beschriebenen Vorgehensweisen (Differenzierer oder Integrierer in Verbindung mit einem Nullpunktdetektor, bzw. Ausgabe des zweiten Messtriggersignals TM2 eine viertel Periodendauer der LC-Resonanzfrequenz nach der Einschaltflanke des Einschaltpulses 5.1) anwendbar.

Die Messung der Spannungen U₁, U₂ in den Messeinheiten 2.233, 2.234 zu den Zeitpunkten der Messtriggersignale TM1, TM2 kann beispielsweise dadurch erfolgen, dass sowohl zum Zeitpunkt des ersten Messtriggersignals TM1, als auch zum Zeitpunkt des zweiten Messtriggersignals TM2 der aktuelle Spannungswert mit A/D-Wandlern erfasst und das Ergebnis zur weiteren Verarbeitung an die Verarbeitungseinheit 2.236 weitergeleitet wird. In diesem Fall können in der Verarbeitungseinheit 2.236 aus dem Verhältnis der beiden Messwerte Rückschlüsse auf die korrekte Funktion der Messanordnung gezogen werden.

Besonders vorteilhaft ist es auch, wenn die Spannungswerte zum Zeitpunkt des zweiten Messtriggersignals TM2 und zum Zeitpunkt des ersten Messtriggersignals TM1 in den Messeinheiten 2.233, 2.234 zuerst mittels Abtast-und Halteschaltungen gespeichert und anschließend unter Beachtung der entgegen gesetzten Polarität (beispielsweise mittels eines Differenzverstärkers) analog addiert werden und erst das resultierende Signal mittels des A/D-Wandlers gemessen wird, da in diesem Fall der Eingangsspannungsbereich der A/D-Wandler besser ausgenutzt und so die Genauigkeit der Messung weiter verbessert werden kann.

Anstelle des Differenzierers können natürlich auch andere geeignete Schaltungen zum Einsatz kommen, wie zum Beispiel Maximalwertdetektoren oder PLL-Bausteine.

In einer weiteren Ausführungsform kann die Auswertung der Spannungen U₁, U₂ auch durch digitalisieren des Signalverlaufs, beispielsweise ab dem Zeitpunkt der Einschaltflanke des Einschaltpulses 5.1 und anschließender Auswertung mittels Signalverarbeitungsalgorithmen erfolgen. In diesem Fall ist es besonders vorteilhaft, als Auswerteelement 2.23 einen Mikrocontroller oder einen digitalen Signalprozessor (DSP) einzusetzen. Diese Lösung hat weiter den Vorteil, das Mikrokontroller, bzw. digitale Signalprozessoren meist bereits über Schaltausgänge verfügen, so dass kein weiterer Aufwand für die Erzeugung des Einschaltpulses 5.1 mehr notwendig ist.

Es sei an dieser Stelle auch darauf hingewiesen, dass Mikrokontroller- bzw. Signal prozessoren auch als sog. IP-Cores verfügbar sind, die in einen ASIC integriert werden können.

Die vorgehenden Ausführungen beziehen auf einen Drehgeber zur Messung von Winkelpositionen, beispielsweise einer Motorwelle. Selbstverständlich kann es sich bei der Positionsmesseinrichtung auch um ein lineares Positionsmessgerät handeln. In diesem Fall ist die Maßverkörperung 1.2 als Maßstab ausgebildet, der von einer Abtasteinheit abgelesen wird, wobei Maßstab und Abtasteinheit in einer Messrichtung X relativ zueinander beweglich angeordnet sind. Die Abtasteinheit umfasst in diesem Fall die Erregerleiterbahnen und Empfängerleiterbahnen, die längs zur Bewegungsrichtung ausgerichtet sind.

## Patentansprüche

1. Positionsmessgerät umfassend
- eine Maßverkörperung (1.2), auf der wenigstens eine Teilungsspur (1.21, 1.22) aufgebracht ist,
- einen Trägerkörper (2.2), an dem mindestens eine Erregerwindung (2.21), durch welche zur Erzeugung eines elektromagnetischen Feldes ein Erregerstrom (I) leitbar ist, sowie mindestens eine Detektoranordnung (2.22) zur Abtastung des elektromagnetischen Feldes angeordnet ist,
- einen Kondensator (2.24), der zusammen mit der Erregerwindung (2.21) einen LC-Schwingkreis bildet,
- ein Auswerteelement (2.23) und
- ein Schaltelement (2.25), das vom Auswerteelement (2.23) schaltbar ist, wobei
die Maßverkörperung (1.2) und der Trägerkörper (2.2) relativ zueinander beweglich angeordnet sind und bei einer Relativbewegung der Maßverkörperung (1.2) gegenüber dem Trägerkörper (2.2) das elektromagnetische Feld von der wenigstens einen Teilungsspur (1.21, 1.22) beeinflussbar ist, wobei
der LC-Schwingkreis durch Schalten des Schaltelements (2.25) mit einem Erregerstrom (I) betreibbar ist, der in der Detektoranordnung (2.22) wenigstens eine Spannung (U₁, U₂, U₃, U₄) induziert, die zur Ermittlung von Positionsinformationen vom Auswerteelement (2.23) elektronisch verarbeitbar ist,
**dadurch gekennzeichnet, dass**
die Erzeugung des Erregerstroms (I) durch Schalten des Schaltelements (2.25) mit Einschaltpulsen (5.1), die eine Einschaltzeitdauer (TP) aufweisen, erfolgt, und
die wenigstens eine in der Detektoranordnung (2.22) induzierte Spannung (U₁, U₂, U₃, U₄) zur Ermittlung der Positionsinformationen im Bereich nach der Ausschaltflanke des Einschaltpulses (5.1) messbar ist.

2. Positionsmessgerät nach Anspruch 1, **dadurch gekennzeichnet, dass** die Auswerteeinheit (2.23) zur Messung der wenigstens einen induzierten Spannung (U₁, U₂, U₃, U₄) wenigstens eine Messeinheit (2.233, 2.234) umfasst.

3. Positionsmessgerät nach Anspruch 2, **dadurch gekennzeichnet, dass** die Auswerteeinheit (2.23) weiter eine Verarbeitungseinheit (2.236) umfasst, der die in der wenigstens einen Messeinheit (2.233, 2.234) gemessenen Messwerte zur Ermittlung von Positionsinformationen zugeführt sind.

4. Positionsmessgerät nach Anspruch 3, **dadurch gekennzeichnet, dass** das Schaltelement (2.25) von der Verarbeitungseinheit (2.236) über eine Schaltleitung (2.232) schaltbar ist.

5. Positionsmessgerät nach einem der vorhergehenden Ansprüche, **dadurch gekennzeichnet, dass** die Auswerteeinheit (2.23) weiter eine Triggereinheit (2.235) umfasst, die Triggersignale (TM1, TM2, TA) zur Festlegung der Einschaltzeitdauer (TP) des Einschaltpulses (5.1), sowie zur Bestimmung wenigstens eines Messzeitpunktes zur Messung der wenigstens einen induzierten Spannung (U₁, U₂, U₃, U₄) erzeugt.

6. Positionsmessgerät nach Anspruch 5, **dadurch gekennzeichnet, dass** der Triggereinheit (2.235) zur Erzeugung der Triggersignale (TM1, TM2, TA) eine aus dem Erregerstrom (I) resultierende Erregerspannung (U_{E}) oder/und wenigstens eine der induzierten Spannungen (U₁, U₂, U₃, U₄) zugeführt ist.

7. Positionsmessgerät nach Anspruch 5 oder 6, **dadurch gekennzeichnet, dass** die Triggersignale (TM1, TM2, TA) ein Ausschalttriggersignal (TA) umfassen, das die Ausschaltflanke des Einschaltpulses (5.1) bestimmt und die Triggereinheit (2.235) das Ausschalttriggersignal (TA) zum Zeitpunkt des ersten Nulldurchgangs der wenigstens einen induzierten Spannung (U₁, U₂, U₃, U₄) erzeugt.

8. Positionsmessgerät nach einem der Ansprüche 5 bis 7, **dadurch gekennzeichnet, dass** die Triggersignale (TM1, TM2, TA) ein erstes Messtriggersignal (TM1) umfassen, das die Triggereinheit (2.235) zum Zeitpunkt des ersten Scheitelpunkts der wenigstens einen induzierten Spannung (U₁, U₂, U₃, U₄) nach der Ausschaltflanke des Einschaltpulses (5.1) erzeugt.

9. Positionsmessgerät nach einem der Ansprüche 5 bis 8, **dadurch gekennzeichnet, dass** die Triggersignale (TM1, TM2, TA) ein zweites Messtriggersignal (TM2) umfassen, das die Triggereinheit (2.235) zum Zeitpunkt des ersten Scheitelpunkts der wenigstens einen induzierten Spannung (U₁, U₂, U₃, U₄) erzeugt.

10. Positionsmessgerät nach einem der Ansprüche 8 bis 9, **dadurch gekennzeichnet, dass** das erste Messtriggersignal (TM1) und/oder das zweite Messtriggersignal (TM2) die Messung der wenigstens einen induzierten Spannung (U₁, U₂, U₃, U₄) in den Messeinheiten (2.233, 2.234) steuern.

11. Positionsmessgerät gemäß einem der vorhergehenden Ansprüche, **dadurch gekennzeichnet, dass** die Detektoranordnung (2.22) erste Detektorwindungen (2.221) und zweite Detektorwindungen (2.222) umfasst und die ersten Detektorwindungen (2.221) innerhalb einer Umdrehung relativ zum Trägerkörper (2.2) eine gegenüber den zweiten Detektorwindungen (2.222) unterschiedliche Anzahl von Signalmaxima liefern.

12. Positionsmessgerät gemäß einem der vorhergehenden Ansprüche, **dadurch gekennzeichnet, dass** das Auswerteelement (2.23) in einem ASIC integriert ist.

13. Verfahren zum Betrieb eines Positionsmessgeräts, umfassend
- eine Maßverkörperung (1.2), auf der wenigstens eine Teilungsspur (1.21, 1.22) aufgebracht ist,
- einen Trägerkörper (2.2), an dem mindestens eine Erregerwindung (2.21), durch welche zur Erzeugung eines elektromagnetischen Feldes ein Erregerstrom (I) leitbar ist, sowie mindestens eine Detektoranordnung (2.22) zur Abtastung des elektromagnetischen Feldes angeordnet ist,
- einen Kondensator, der zusammen mit der Erregerwindung (2.21) einen LC-Schwingkreis bildet,
- ein Auswerteelement (2.23) und
- ein Schaltelement (2.25), das vom Auswerteelement (2.23) schaltbar ist, wobei
die Maßverkörperung (1.2) und der Trägerkörper (2.2) relativ zueinander beweglich angeordnet sind und bei einer Relativbewegung der Maßverkörperung (1.2) gegenüber dem Trägerkörper (2.2) das elektromagnetische Feld von der wenigstens einen Teilungsspur (1.21, 1.22) beeinflussbar ist, wobei
der LC-Schwingkreis durch Schalten des Schaltelements (2.25) mit einem Erregerstrom (I) betreibbar ist, der in der Detektoranordnung (2.22) wenigstens eine Spannung (U₁, U₂, U₃, U₄) induziert, die zur Ermittlung von Positionsinformationen vom Auswerteelement (2.23) elektronisch verarbeitbar ist,
**gekennzeichnet durch** folgende Schritte:
- Erzeugen eines Erregerstroms (I) in der Erregerwindung (2.21) **durch** Schalten des Schaltelements (2.25) mit einem Einschaltpuls (5.1), der eine Einschaltzeitdauer (TP) aufweist,
- Messung der wenigstens einen in der Detektoranordnung (2.22) induzierten Spannung (U₁, U₂, U₃, U₄) zur Ermittlung der Positionsinformationen im Bereich nach der Ausschaltflanke des Einschaltpulses (5.1).

14. Verfahren nach Anspruch 13, **dadurch gekennzeichnet, dass** das Schaltelement (2.25) über eine Schaltleitung (2.232) von einer Verarbeitungseinheit (2.236) geschaltet wird, die im Auswerteelement (2.23) angeordnet ist.

15. Verfahren nach Anspruch 13 oder 14, **dadurch gekennzeichnet, dass** die wenigstens eine induzierte Spannung (U₁, U₂, U₃, U₄) in wenigstens einer Messeinheit (2.233, 2.234) gemessen wird, die im Auswerteelement (2.23) angeordnet ist.

16. Verfahren nach einem der Ansprüche 13 bis 15, **dadurch gekennzeichnet, dass** das Auswerteelement (2.23) weiter eine Triggereinheit (2.235) umfasst, die Triggersignale (TM1, TM2, TA) zur Festlegung der Einschaltzeitdauer (TP) des Einschaltpulses (5.1), sowie zur Bestimmung wenigstens eines Messzeitpunktes zur Messung der wenigstens einen induzierten Spannung (U₁, U₂, U₃, U₄) erzeugt.

17. Verfahren nach Anspruch 16, **dadurch gekennzeichnet, dass** in der Triggereinheit (2.235) die Triggersignale (TM1, TM2, TA) mit Hilfe einer aus dem Erregerstrom (I) resultierenden Erregerspannung (U_{E}) oder/und wenigstens einer induzierten Spannung (U₁, U₂, U₃, U₄) erzeugt werden.

18. Verfahren nach einem der Ansprüche 16 bis 17, **dadurch gekennzeichnet, dass** die Triggersignale (TM1, TM2, TA) ein Ausschalttriggersignal (TA) umfassen, das die Ausschaltflanke des Einschaltpulses (5.1) bestimmt und die Triggereinheit (2.235) das Ausschalttriggersignal (TA) zum Zeitpunkt des ersten Nulldurchgangs der wenigstens einen induzierten Spannung (U₁, U₂, U₃, U₄) erzeugt.

19. Verfahren nach einem der Ansprüche 16 bis 18, **dadurch gekennzeichnet, dass** die Triggersignale (TM1, TM2, TA) ein erstes Messtriggersignal (TM1) umfassen, das den Zeitpunkt einer ersten Messung der wenigstens einen induzierten Spannung (U₁, U₂, U₃, U₄) bestimmt und die Triggereinheit (2.235) das erste Messtriggersignal (TM1) im Bereich des ersten Scheitelpunkts der wenigstens einen induzierten Spannung (U₁, U₂, U₃, U₄) nach der Ausschaltflanke des Einschaltpulses (5.1) erzeugt.

20. Verfahren nach Anspruch 18, **dadurch gekennzeichnet, dass** die Triggersignale (TM1, TM2, TA) ein zweites Messtriggersignal (TM2) umfassen, das den Zeitpunkt einer zweiten Messung der wenigstens einen induzierten Spannung (U₁, U₂, U₃, U₄) bestimmt und die Triggereinheit (2.235) das zweite Messtriggersignal (TM2) im Bereich des ersten Scheitelpunkts der wenigstens einen induzierten Spannung (U₁, U₂, U₃, U₄) erzeugt.

21. Verfahren nach Anspruch 19, **dadurch gekennzeichnet, dass** die Positionsinformation in der Verarbeitungseinheit (2.236) unter Verwendung des im Bereich des ersten Messtriggersignals (TM1) erfassten Messwerts und des im Bereich des zweiten Messtriggersignals (TM2) erfassten Messwerts ermittelt wird.

## Claims

1. Position measuring instrument, comprising
- a material measure (1.2) on which at least one graduation track (1.21, 1.22) is applied,
- a support body (2.2) on which there are arranged at least one excitation winding (2.21) through which an excitation current (1) can be conducted in order to generate an electromagnetic field, and at least one detector arrangement (2.22) for scanning the electromagnetic field,
- a capacitor (2.24) which, together with the excitation winding (2.21), forms an LC resonant circuit,
- an evaluation element (2.23), and
- a switching element (2.25) which can be switched by the evaluation element (2.23),
the material measure (1.2) and the support body (2.2) being arranged movably relative to one another, and the at least one graduation track (1.21, 1.22) being capable of influencing the electromagnetic field in the event of a relative movement of the material measure (1.2) with respect to the support body (2.2),
it being possible to operate the LC resonant circuit by switching the switching element (2.25) with an excitation current (1) which induces in the detector arrangement (2.22) at least one voltage (U₁, U₂, U₃, U₄) which can be processed electronically by the evaluation element (2.23) to determine position information, **characterized in that**
the generation of the excitation current (1) is performed by switching the switching element (2.25) with switch-on pulses (5.1) which have an on period (TP), and
the at least one voltage (U₁, U₂, U₃, U₄) induced in the detector arrangement (2.22) can be measured in order to determine the position information in the region downstream of the switch-off edge of the switch-on pulse (5.1).

2. Position measuring instrument according to Claim 1, **characterized in that** the evaluation unit (2.23) for measuring the at least one induced voltage (U₁, U₂, U₃, U₄) comprises at least one measuring unit (2.233, 2.234).

3. Position measuring instrument according to Claim 2, **characterized in that** the evaluation unit (2.23) further comprises a processing unit (2.236) which is fed the measured values measured in the at least one measuring unit (2.233, 2.234) in order to determine items of position information.

4. Position measuring instrument according to Claim 3, **characterized in that** the switching element (2.25) can be switched by the processing unit (2.236) via a switching line (2.232).

5. Position measuring instrument according to one of the preceding claims, **characterized in that** the evaluation unit (2.23) further comprises a trigger unit (2.235) which produces trigger signals (TM1, TM2, TA) for fixing the on period (TP) of the switch-on pulse (5.1), and for determining at least one measurement instant for measuring the at least one induced voltage (U₁, U₂, U₃, U₄).

6. Position measuring instrument according to Claim 5, **characterized in that** the trigger unit (2.235) for producing the trigger signals (TM1, TM2 TA) is fed an excitation voltage (U_{E}) resulting from the excitation current (l), and/or at least one of the induced voltages (U₁, U₂, U₃, U₄).

7. Position measuring instrument according to Claim 5 or 6, **characterized in that** the trigger signals (TM1, TM2, TA) comprise a switch-off trigger signal (TA) which determines the switch-off edge of the switch-on pulse (5.1), and the trigger unit (2.235) produces the switch-off trigger signal (TA) at the instant of the first zero crossing of the at least one induced voltage (U₁, U₂, U₃, U₄).

8. Position measuring instrument according to one of Claims 5 to 7, **characterized in that** the trigger signals (TM1, TM2, TA) comprise a first measurement trigger signal (TM1) which the trigger unit (2.235) produces at the instant of the first peak of the at least one induced voltage (U₁, U₂, U₃, U₄) downstream of the switch-off edge of the switch-on pulse (5.1).

9. Position measuring instrument according to one of Claims 5 to 8, **characterized in that** the trigger signals (TM1, TM2, TA) comprise a second measurement trigger signal (TM2) which the trigger unit (2.235) produces at the instant of the first peak of the at least one induced voltage (U₁, U₂, U₃, U₄).

10. Position measuring instrument according to either of Claims 8 and 9, **characterized in that** the first measurement trigger signal (TM1) and/or the second measurement trigger signal (TM2) control the measurement of the at least one induced voltage (U₁, U₂, U₃, U₄) in the measuring units (2.233, 2.234).

11. Position measuring instrument according to one of the preceding claims, **characterized in that** the detector arrangement (2.22) comprises first detector windings (2.221) and second detector windings (2.222), and the first detector windings (2.221) supply a number of signal maxima that differs from the second detector windings (2.222) within a rotation relative to the support body (2.2).

12. Position measuring instrument according to one of the preceding claims, **characterized in that** the evaluation element (2.23) is integrated in an ASIC.

13. Method for operating a position measuring instrument, comprising
- a material measure (1.2) on which at least one graduation track (1.21, 1.22) is applied,
- a support body (2.2) on which there are arranged at least one excitation winding (2.21) through which an excitation current (1) can be conducted in order to generate an electromagnetic field, and at least one detector arrangement (2.22) for scanning the electromagnetic field,
- a capacitor which, together with the excitation winding (2.21), forms an LC resonant circuit,
- an evaluation element (2.23), and
- a switching element (2.25) which can be switched by the evaluation element (2.23),
the material measure (1.2) and the support body (2.2) being arranged movably relative to one another, and the at least one graduation track (1.21, 1.22) being capable of influencing the electromagnetic field in the event of a relative movement of the material measure (1.2) with respect to the support body (2.2),
it being possible to operate the LC resonant circuit by switching the switching element (2.25) with an excitation current (1) which induces in the detector arrangement (2.22) at least one voltage (U₁, U₂, U₃, U₄) which can be processed electronically by the evaluation element (2.23) to determine position information, **characterized by** the following steps:
- generating an excitation current (l) in the excitation winding (2.21) by switching the switching element (2.25) with a switch-on pulse (5.1) which has an on period (TP), and
- measuring the at least one voltage (U₁, U₂, U₃, U₄) induced in the detector arrangement (2.22) in order to determine the position information in the region downstream of the switch-off edge of the switch-on pulse (5.1).

14. Method according to Claim 13, **characterized in that** the switching element (2.25) is switched via a switching line (2.232) from a processing unit (2.236) which is arranged in the evaluation element (2.23).

15. Method according to Claim 13 or 14, **characterized in that** the at least one induced voltage (U₁, U₂, U₃, U₄) is measured in at least one measuring unit (2.233, 2.234) which is arranged in the evaluation element (2.23).

16. Method according to one of Claims 13 to 15, **characterized in that** the evaluation element (2.23) further comprises a trigger unit (2.235) which produces trigger signals (TM1, TM2, TA) for fixing the on period (TP) of the switch-on pulse (5.1), and for determining at least one measurement instant for measuring the at least one induced voltage (U₁, U₂, U₃, U₄).

17. Method according to Claim 16, **characterized in that** the trigger signals (TM1, TM2, TA) are produced in the trigger unit (2.235) with the aid of an excitation voltage (U_{E}) resulting from the excitation current (l), and/or at least one induced voltage (U₁, U₂, U₃, U₄).

18. Method according to one of Claims 16 to 17, **characterized in that** the trigger signals (TM1, TM2, TA) comprise a switch-off trigger signal (TA) which determines the switch-off edge of the switch-on pulse (5.1), and the trigger unit (2.235) produces the switch-off trigger signal (TA) at the instant of the first zero crossing of the at least one induced voltage (U₁, U₂, U₃, U₄).

19. Method according to one of Claims 16 to 18, **characterized in that** the trigger signals (TM1, TM2, TA) comprise a first measurement trigger signal (TM1) which determines the instant of a first measurement of the at least one induced voltage (U₁, U₂, U₃, U₄), and the trigger unit (2.235) produces the first measurement trigger signal (TM1) in the region of the first peak of the at least one induced voltage (U₁, U₂, U₃, U₄) downstream of the switch-off edge of the switch-on pulse (5.1).

20. Method according to Claim 18, **characterized in that** the trigger signals (TM1, TM2, TA) comprise a second measurement trigger signal (TM2) which determines the instant of a second measurement of the at least one induced voltage (U₁, U₂, U₃, U₄), and the trigger unit (2.235) produces the second measurement trigger signal (TM2) in the region of the first peak of the at least one induced voltage (U₁, U₂, U₃, U₄).

21. Method according to Claim 19, **characterized in that** the position information is determined in the processing unit (2.236) by using the measured value acquired in the region of the first measurement trigger signal (TM1), and the measured value acquired in the region of the second measurement trigger signal (TM2).

## Revendications

1. Appareil de mesure de position comprenant
- un étalon (1.2) sur lequel est appliquée au moins une piste de séparation (1.21, 1.22),
- un corps porteur (2.2) sur lequel sont disposés au moins un enroulement excitateur (2.21), à travers lequel peut circuler un courant excitateur (I) en vue de générer un champ électromagnétique, ainsi qu'au moins un arrangement détecteur (2.22) pour détecter le champ électromagnétique,
- un condensateur (2.24) qui, conjointement avec l'enroulement excitateur (2.21), forme un circuit oscillant LC,
- un élément d'interprétation (2.23) et
- un élément de commutation (2.25) qui peut être commuté par l'élément d'interprétation (2.23),
l'étalon (1.2) et le corps porteur (2.2) étant disposés avec mobilité l'un par rapport à l'autre et, lors d'un mouvement relatif de l'étalon (1.2) par rapport au corps porteur (2.2), le champ électromagnétique pouvant être influencé par l'au moins une piste de séparation (1.21, 1.22),
le circuit oscillant LC pouvant être mis en fonctionnement en commutant l'élément de commutation (2.25) avec un courant excitateur (I), lequel induit au moins une tension (U₁, U₂, U₃, U₄) dans l'arrangement détecteur (2.22), laquelle peut être traitée électroniquement pour la détermination d'informations de position par l'élément d'interprétation (2.23),
**caractérisé en ce que**
la génération du courant excitateur (I) s'effectue en commutant l'élément de commutation (2.25) avec des impulsions de mise en marche (5.1) qui présentent une durée de mise en marche (TP), et
l'au moins une tension (U₁, U₂, U₃, U₄) induite dans l'arrangement détecteur (2.22) peut être mesurée pour déterminer les informations de position dans la plage après le front de mise à l'arrêt de l'impulsion de mise en marche (5.1).

2. Appareil de mesure de position selon la revendication 1, **caractérisé en ce que** l'unité d'interprétation (2.23) comprend au moins une unité de mesure (2.233, 2.234) pour mesurer l'au moins une tension (U₁, U₂, U₃, U₄) induite.

3. Appareil de mesure de position selon la revendication 2, **caractérisé en ce que** l'unité d'interprétation (2.23) comprend en plus au moins une unité de traitement (2.236) à laquelle sont acheminées les valeurs mesurées dans l'au moins une unité de mesure (2.233, 2.234) en vue de déterminer des informations de position.

4. Appareil de mesure de position selon la revendication 3, **caractérisé en ce que** l'élément de commutation (2.25) peut être commuté par l'unité de traitement (2.236) par le biais d'une ligne de commutation (2.232).

5. Appareil de mesure de position selon l'une des revendications précédentes, **caractérisé en ce que** l'unité d'interprétation (2.23) comprend en plus une unité de déclenchement (2.235) qui génère des signaux de déclenchement (TM1, TM2, TA) pour déterminer la durée de mise en marche (TP) de l'impulsion de mise en marche (5.1) ainsi que pour déterminer au moins un instant de mesure en vue de mesurer l'au moins une tension (U₁, U₂, U₃, U₄) induite.

6. Appareil de mesure de position selon la revendication 5, **caractérisé en ce qu'**une tension d'excitateur (U_{E}) résultant du courant excitateur (I) et/ou au moins l'une des tensions (U₁, U₂, U₃, U₄) induites sont acheminées à l'unité de déclenchement (2.235) pour générer les signaux de déclenchement (TM1, TM2, TA).

7. Appareil de mesure de position selon la revendication 5 ou 6, **caractérisé en ce que** les signaux de déclenchement (TM1, TM2, TA) comprennent un signal de déclenchement de mise à l'arrêt (TA) qui détermine le front de mise à l'arrêt de l'impulsion de mise en marche (5.1) et l'unité de déclenchement (2.235) génère le signal de déclenchement de mise à l'arrêt (TA) à l'instant du premier passage par zéro de l'au moins une tension (U₁, U₂, U₃, U₄) induite.

8. Appareil de mesure de position selon l'une des revendications 5 à 7, **caractérisé en ce que** les signaux de déclenchement (TM1, TM2, TA) comprennent un premier signal de déclenchement de mesure (TM1) qui est généré par l'unité de déclenchement (2.235) à l'instant du premier sommet de l'au moins une tension (U₁, U₂, U₃, U₄) induite après le front de mise à l'arrêt de l'impulsion de mise en marche (5.1).

9. Appareil de mesure de position selon l'une des revendications 5 à 8, **caractérisé en ce que** les signaux de déclenchement (TM1, TM2, TA) comprennent un deuxième signal de déclenchement de mesure (TM2) qui est généré par l'unité de déclenchement (2.235) à l'instant du premier sommet de l'au moins une tension (U₁, U₂, U₃, U₄) induite.

10. Appareil de mesure de position selon l'une des revendications 8 et 9, **caractérisé en ce que** le premier signal de déclenchement de mesure (TM1) et/ou le deuxième signal de déclenchement de mesure (TM2) commandent la mesure de l'au moins une tension (U₁, U₂, U₃, U₄) induite dans les unités de mesure (2.233, 2.234).

11. Appareil de mesure de position selon l'une des revendications précédentes, **caractérisé en ce que** l'arrangement détecteur (2.22) comprend des premiers enroulements de détecteur (2.221) et des deuxièmes enroulements de détecteur (2.222) et les premiers enroulements de détecteur (2.221), au sein d'un tour par rapport au corps porteur (2.2), délivrent un nombre de maximums du signal différent de celui des deuxièmes enroulements de détecteur (2.222).

12. Appareil de mesure de position selon l'une des revendications précédentes, **caractérisé en ce que** l'élément d'interprétation (2.23) est intégré dans un ASIC.

13. Procédé de fonctionnement d'un appareil de mesure de position comprenant :
- un étalon (1.2) sur lequel est appliquée au moins une piste de séparation (1.21, 1.22),
- un corps porteur (2.2) sur lequel sont disposés au moins un enroulement excitateur (2.21), à travers lequel peut circuler un courant excitateur (I) en vue de générer un champ électromagnétique, ainsi qu'au moins un arrangement détecteur (2.22) pour détecter le champ électromagnétique,
- un condensateur qui, conjointement avec l'enroulement excitateur (2.21), forme un circuit oscillant LC,
- un élément d'interprétation (2.23) et
- un élément de commutation (2.25) qui peut être commuté par l'élément d'interprétation (2.23),
l'étalon (1.2) et le corps porteur (2.2) étant disposés avec mobilité l'un par rapport à l'autre et, lors d'un mouvement relatif de l'étalon (1.2) par rapport au corps porteur (2.2), le champ électromagnétique pouvant être influencé par l'au moins une piste de séparation (1.21, 1.22),
le circuit oscillant LC pouvant être mis en fonctionnement en commutant l'élément de commutation (2.25) avec un courant excitateur (I), lequel induit au moins une tension (U₁, U₂, U₃, U₄) dans l'arrangement détecteur (2.22), laquelle peut être traitée électroniquement pour la détermination d'informations de position par l'élément d'interprétation (2.23),
**caractérisé par** les étapes suivantes :
- génération d'un courant excitateur (I) dans l'enroulement excitateur (2.21) en commutant l'élément de commutation (2.25) avec une impulsion de mise en marche (5.1) qui présente une durée de mise en marche (TP),
- mesure de l'au moins une tension (U₁, U₂, U₃, U₄) induite dans l'arrangement détecteur (2.22) pour déterminer les informations de position dans la plage après le front de mise à l'arrêt de l'impulsion de mise en marche (5.1).

14. Procédé selon la revendication 13, **caractérisé en ce que** l'élément de commutation (2.25) est commuté par le biais d'une ligne de commutation (2.232) par une unité de traitement (2.236) qui est disposée dans l'élément d'interprétation (2.23).

15. Procédé selon la revendication 13 ou 14, **caractérisé en ce que** l'au moins une tension (U₁, U₂, U₃, U₄) induite est mesurée dans au moins une unité de mesure (2.233, 2.234) qui est disposée dans l'élément d'interprétation (2.23).

16. Procédé selon l'une des revendications 13 à 15, **caractérisé en ce que** l'élément d'interprétation (2.23) comprend en plus une unité de déclenchement (2.235) qui génère des signaux de déclenchement (TM1, TM2, TA) pour déterminer la durée de mise en marche (TP) de l'impulsion de mise en marche (5.1) ainsi que pour déterminer au moins un instant de mesure en vue de mesurer l'au moins une tension (U₁, U₂, U₃, U₄) induite.

17. Procédé selon la revendication 16, **caractérisé en ce que** dans l'unité de déclenchement (2.235), les signaux de déclenchement (TM1, TM2, TA) sont générés à l'aide d'une tension d'excitateur (U_{E}) résultant du courant excitateur (I) et/ou d'au moins l'une des tensions (U₁, U₂, U₃, U₄) induites.

18. Procédé selon l'une des revendications 16 et 17, **caractérisé en ce que** les signaux de déclenchement (TM1, TM2, TA) comprennent un signal de déclenchement de mise à l'arrêt (TA) qui détermine le front de mise à l'arrêt de l'impulsion de mise en marche (5.1) et l'unité de déclenchement (2.235) génère le signal de déclenchement de mise à l'arrêt (TA) à l'instant du premier passage par zéro de l'au moins une tension (U₁, U₂, U₃, U₄) induite.

19. Procédé selon l'une des revendications 16 à 18, **caractérisé en ce que** les signaux de déclenchement (TM1, TM2, TA) comprennent un premier signal de déclenchement de mesure (TM1) qui détermine l'instant d'une première mesure de l'au moins une tension (U₁, U₂, U₃, U₄) induite et l'unité de déclenchement (2.235) génère le premier signal de déclenchement de mesure (TM1) dans la plage du premier sommet de l'au moins une tension (U₁, U₂, U₃, U₄) induite après le front de mise à l'arrêt de l'impulsion de mise en marche (5.1).

20. Procédé selon la revendication 18, **caractérisé en ce que** les signaux de déclenchement (TM1, TM2, TA) comprennent un deuxième signal de déclenchement de mesure (TM2) qui détermine l'instant d'une deuxième mesure de l'au moins une tension (U₁, U₂, U₃, U₄) induite et l'unité de déclenchement (2.235) génère le deuxième signal de déclenchement de mesure (TM2) dans la plage du premier sommet de l'au moins une tension (U₁, U₂, U₃, U₄) induite.

21. Procédé selon la revendication 19, **caractérisé en ce que** l'information de position est déterminée dans l'unité de traitement (2.236) en utilisant la valeur mesurée détectée dans la plage du premier signal de déclenchement de mesure (TM1) et la valeur mesurée détectée dans la plage du deuxième signal de déclenchement de mesure (TM2).
